# EUROPEAN PATENT SPECIFICATION

(11) **EP 1 882 877 B1**
(45) Date of publication and mention of the grant of the patent: **29.09.2010**
(21) Application number: 07013859.9
(22) Date of filing: 16.07.2007
(51) Int. Cl.: F16L 37/14, F16B 41/00

(54) **Device for quick connection of two components of systems for the distribution of liquids or gases, with high safety against tampering**
Vorrichtung zur schnellen Verbindung zweier Systemkomponenten zur Verteilung von Flüssigkeiten oder Gasen mit hoher Fälschungssicherheit
Dispositif de connexion rapide de deux composants des systèmes pour la distribution de liquides ou de gaz, avec une sécurité élevée contre le sabotage

(30) Priority: 24.07.2006 IT MI20061445
(43) Date of publication of application: 30.01.2008
(73) Proprietor: Colombo, Renato, 28021 Borgomanero (Novara) (IT)
(72) Inventor: Colombo, Renato, 28021 Borgomanero (Novara) (IT)
(74) Representative: Alagem Modiano, Lara S.

(56) References cited:
- EP-A- 1 878 963
- EP-B- 1 024 324

## Description

The present invention relates to a device for quick connection of two components of systems for the distribution of liquids or gases, with high safety against tampering.

Devices for quickly connecting two components of systems for the distribution of liquids or gases are known.

In particular, devices are known which comprise substantially a female seat, which is defined in a first one of the two components to be connected, and a male element, which is provided at an end region of a second component to be connected to the first component and can be inserted within the female seat. In the first component there is a passage which interferes with such seat and accommodates a locking pin, which can be moved along the passage so as to pass from a first position, in which it is disengaged from the male element, to a second position, in which it engages the male element so as to retain it stably within the female seat.

A device of this kind is disclosed for example in EP-1.024.324.

Devices of this type allow to provide the connection between two components extremely rapidly, simply by acting on the locking pin in order to engage it with the male element or disengage it from the male element inserted within the female seat.

However, these devices suffer the drawback of allowing easy tampering of the connection between the two components.

This problem is particularly important in the field of systems for the distribution of liquids or gases, in which the need has always been felt to achieve high safety against the danger of accidental or unintentional tampering by unauthorized personnel.

The aim of the present invention is to solve the problem described above by providing a device for quick connection of two components of systems for the distribution of liquids or gases which offers adequate assurances of safety against the danger of tampering by unauthorized personnel.

Within this aim, an object of the invention is to provide a device which in any case facilitates the operations for the connection and disconnection of the two components to be connected to each other.

Another object of the invention is to provide a device which can be manufactured at competitive costs.

This aim and these and other objects, which will become better apparent hereinafter, are achieved by a device for quick connection of two components of systems for the distribution of liquids or gases, comprising a female seat, which is defined in a first component of the two components to be connected, and a male element, which is provided at an end of the second component and can be mated with said female seat, a passage being provided within said first component which interferes with said female seat and accommodates a locking pin which can move along said passage in order to pass from a first position, in which it is disengaged from said male element, to a second position, in which it engages said male element, characterized in that said pin has, at one of its longitudinal ends, an actuation head which is accommodated, when said pin is in said second position, in a recessed seat formed in said first component at the inlet of said passage, an actuation key being provided which can be inserted in said recessed seat and can engage monolithically, in translational motion along a direction which is parallel to the longitudinal extension of said pin, said pin actuation head in order to engage said pin and pull it for its passage from said second position to said first position.

Further characteristics and advantages of the invention will become better apparent from the description of a preferred but not exclusive embodiment of the device according to the invention, illustrated by way of non-limiting example in the accompanying drawings, wherein:

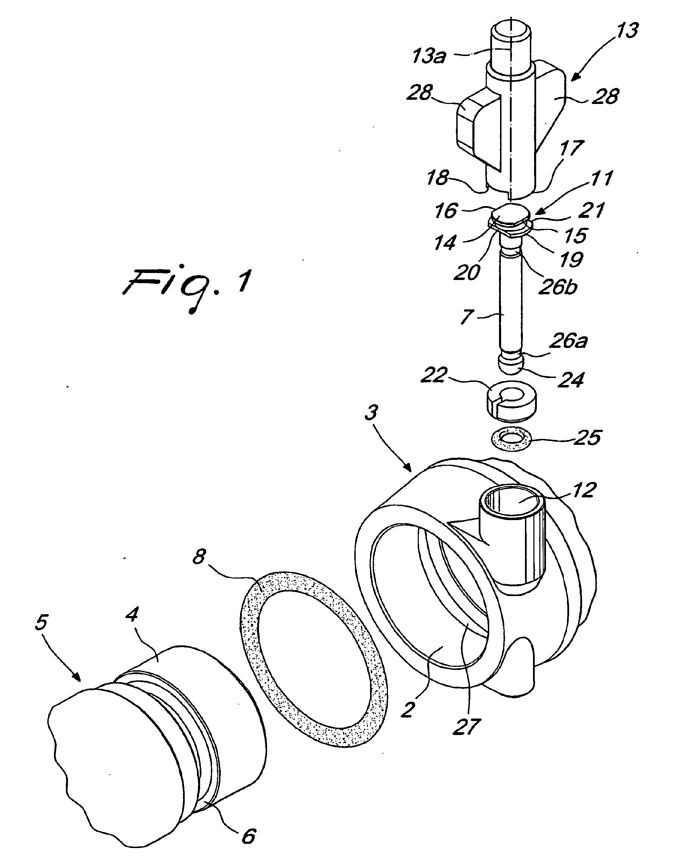

Figure 1 is an exploded perspective view of the device according to the invention, with the two components to be connected by means of the device shown only partially for the sake of simplicity;

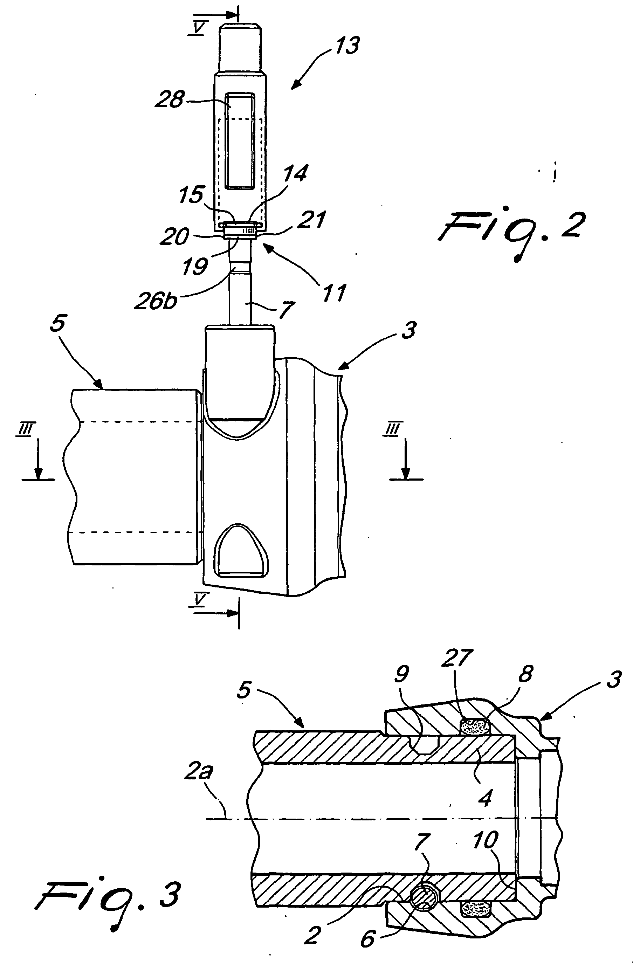

Figure 2 is a side elevation view of the device according to the invention, with the two components to be connected by means of the device shown only partially for the sake of simplicity and with the locking pin in the first position;
Figure 3 is a sectional view of Figure 2, taken along the line III-III, with the locking pin in the second position;
Figure 4 is a sectional view of Figure 2, taken along the line IV-IV, with the locking pin in the second position;
Figure 5 is a sectional view of Figure 2, taken along the line V-V, with the locking pin in the first position;
Figures 6 to 9 are perspective views of the sequence of the mating of the actuation key with the actuation head of the locking pin, with the locking pin shown in partial cross-section.

With reference to the Figures, the device according to the invention comprises a female seat 2, which is defined in a first component 3 of the two components 3 and 5 to be connected, which are shown only partially for the sake of simplicity, and a male element 4, which is provided at an end of a second component 5 to be connected to the first component 3 and can be mated by insertion with the female seat 2.

In the first component 3 a passage 6 is provided which interferes with the seat 2 and accommodates a locking pin 7 which can move along the passage 6 in order to pass from a first position, in which it is disengaged from the male element 4, to a second position, in which it engages the male element 4, and vice versa.

The female seat 2 is substantially cylindrical or conical, and the male element 4 correspondingly has a substantially cylindrical or conical shape so as to mate coaxially with the female seat 2.

Sealing means 8 are interposed between the female seat 2 and the portion of the male element 4 that can be inserted in the female seat 2.

The male element 4 is preferably provided in the form of a sleeve and has, on the outer lateral surface of its portion which can be inserted in the female seat 2, at least one axial shoulder, directed away from the end of the male element 4 which can be inserted in the female seat 2 and can be positioned, by way of the insertion of the male element 4 in the female seat 2, at the passage 6 provided in the portion of the first component 3 which is occupied by the female seat 2.

The passage 6 interferes with the lateral surface of the female seat 2 and extends along a substantially rectilinear direction which is perpendicular to the axis 2a of the female seat 2.

The passage 6 can be occupied by the pin 7, which defines an abutment for the shoulder provided on the outer lateral surface of the portion of the male element 4 which is inserted in the female seat 2, so as to prevent the axial extraction of the male element 4 from the female seat 2.

Conveniently, said axial shoulder is defined by a groove 9 provided on the outer lateral surface of the portion of the male element 4 which is inserted within the female seat 2. In practice, the groove 9 defines, on the outer lateral surface of the male element 4, two mutually opposite axial shoulders and the pin 7 engages between said two mutually opposite axial shoulders.

The groove 9 is preferably arranged circumferentially all around the male element 4, and the passage 6, which as mentioned interferes with the lateral surface of the female seat 2, is substantially tangent to the bottom of the groove 9 when the male element 4 is inserted correctly in the female seat 2, so that the pin 7, inserted in the passage 6, engages a portion of the groove 9, locking axially the male element 4 with respect to the female seat 2.

The first component 3 has, on the bottom of the female seat 2, an internal contact abutment 10, against which the end of the male element 4 rests at the end of its insertion within the female seat 2.

In this condition of correct insertion of the male element 4 within the female seat 2, the groove 9 is located at the passage 6.

Optionally, the groove 9 can be limited to the portion of the male element 4 that is designed to be positioned at the passage 6. In this case, the groove 9 can have a straight bottom which is parallel to the passage 6, so that the pin 7, by engaging the bottom of the groove 9, also blocks the rotation of the male element 4 about its own axis with respect to the female seat 2.

According to the invention, the pin 7 has, at one of its longitudinal ends, an actuation head 11 which is accommodated, when the pin 7 is in the second position, in a recessed seat 12, which is provided in the first component 3 at the inlet of the passage 6.

The device further comprises an actuation key 13, which can be inserted in the recessed seat 12 and can engage, so as to be monolithic (or behaves as a single piece) in translational motion along a direction which is parallel to the longitudinal extension of the pin 7, the actuation head 11 of the pin 7, so as to engage the pin 7 and apply thereto a traction in order to make it pass from the second position to the first position.

Preferably, an actuation key 13 can engage the actuation head 11 or can be disengaged from the actuation head 11 by turning the actuation key 13 about its own axis 13a with respect to the actuation head 11 of the pin 7.

Conveniently, means for delimiting the rotation of the actuation key 13 about its own axis with respect to the actuation head 11, so as to keep the actuation key 13 engaged with the actuation head 11, are provided.

More particularly, the actuation head 11 has, at its end directed toward the outside of the recessed seat 12, a first flange 14, which has at least one perimetric cutout 15, 16, and the actuation key 13 has, at its end which can be inserted in the recessed seat 12, at least one protrusion 17, 18 which can be inserted in said cutout 15, 16 and is provided with an undercut tooth 17a, 18a, which can be positioned on the face of the first flange 14 that is directed toward the bottom of the recessed seat 12 and can be offset with respect to said cutout 15, 16 by turning about its own axis 13a, through a preset angle, the actuation key 13 with respect to the actuation head 11.

Conveniently, the first flange 14 has two cutouts 15, 16, which are provided at two diametrically mutually opposite regions of the first flange 14, and the actuation key 13 correspondingly has, at its end which can be inserted in the recessed seat 12, at least two protrusions 17, 18, which are arranged so as to match the two cutouts 15, 16 and can be inserted through said cutouts 15, 16. These protrusions 17, 18 are each provided with an undercut tooth 17a, 18a, which can be positioned on the face of the first flange 14 that is directed toward the bottom of the recessed seat 12 and can be offset angularly with respect to the cutout 15 or 16, through which it has been inserted, by turning, about the axis 13a through an angle of substantially 90°, the actuation key 13 with respect to the actuation head 11.

Preferably, the two cutouts 15, 16 are defined by perimetric flat portions of the first flange 14, and the protrusions 17, 18 with the corresponding undercut tooth 17a, 18a of the actuation key 13 are shaped complementarily with respect to said cutouts 15, 16.

In practice, the axial end of the body of the actuation key 13 is provided, at least proximate to the protrusions 17, 18, as a hollow cylindrical body which can be fitted coaxially around the first flange 14, and the protrusions 17, 18 are constituted by two portions of the side wall of said hollow cylindrical body which are located in two diametrically mutually opposite regions. The undercut tooth 17a, 18a is constituted by a tab of the protrusions 17, 18 which lies on a plane which is substantially perpendicular to the axis of the hollow cylindrical body.

The means for delimiting the rotation of the actuation key 13 about its own axis 13a with respect to the actuation head 11 comprise a second flange 19, which lies on a plane which is substantially parallel to the plane of arrangement of the first flange 14 and is spaced from the first flange 14 toward the bottom of the recessed seat 12. The second flange 19 has at least one stroke limiting shoulder 20, 21, which can be engaged by a corresponding undercut tooth 17a, 18a when it is arranged on the face of the first flange 14 which is directed toward the bottom of the recessed seat 12, i.e., after said undercut teeth 17a, 18a have moved beyond the first flange 14 toward the bottom of the recessed seat 12.

Preferably, there are two stroke limiting shoulders 20, 21, defined by two perimetric flat portions of the second flange 19 which are offset substantially by 90° about the axis 7a of the pin 7 with respect to the perimetric flat portions of the first flange 14. The perimetric flat portions of the second flange 19 are provided substantially like the flat portions of the first flange 14 and each can be mated with one of the protrusions 17, 18 with the corresponding undercut tooth 17a, 18a.

The second flange 19, with the pin 7 in the second position, rests against the bottom of the recessed seat 12 which defines a stroke limiting contact element for the end of the actuation key 13 that is inserted in the recessed seat 12, so that the end of the actuation key 13 that is provided with the protrusions 17, 18, at the end of its insertion in the recessed seat 12, can be mated with the second flange 19 by means of a simple rotation, keeping it in contact against the bottom of the recessed seat 12.

The recessed seat 12 is provided so that the actuation head 11, with the pin 7 in the second position, is accommodated completely within the recessed seat 12.

Preferably, the actuation head 11, with the pin 7 in the second position, is spaced adequately from the access opening of the recessed seat 12 toward the inside of said recessed seat 12, so as to exclude safely the possibility of engaging the actuation head 11 of the pin 7 in the second position, except by means of the actuation key 13 to be inserted through the opening for accessing the recessed seat 12.

Advantageously, means for retaining the pin 7 in the passage 6 are provided.

Such retention means comprise an elastic ring 22, which is inserted and locked within a corresponding receptacle 23 which is defined on the bottom of the recessed seat 12. The end portion 24 of the pin 7, which lies opposite with respect to the actuation head 11, has a larger diameter than the inside diameter of the elastic ring 22, while the remaining portion of the pin 7 has a smaller diameter than the inside diameter of the elastic ring 22. In this manner, the pin 7 can slide along the elastic ring 22 but cannot be extracted completely from the passage 6.

The retention means can also comprise means for contrasting the sliding of the pin 7 along the passage 6. Such contrast means can be constituted by a ring 25 made of elastically deformable material, such as for example an O-Ring, which is arranged between the bottom of the receptacle 23 and the elastic ring 22. The inside diameter of the ring 25 is sized so as to achieve its sliding mating with the lateral surface of the pin 7, producing friction which hinders the free sliding of the pin 7 along the passage 6.

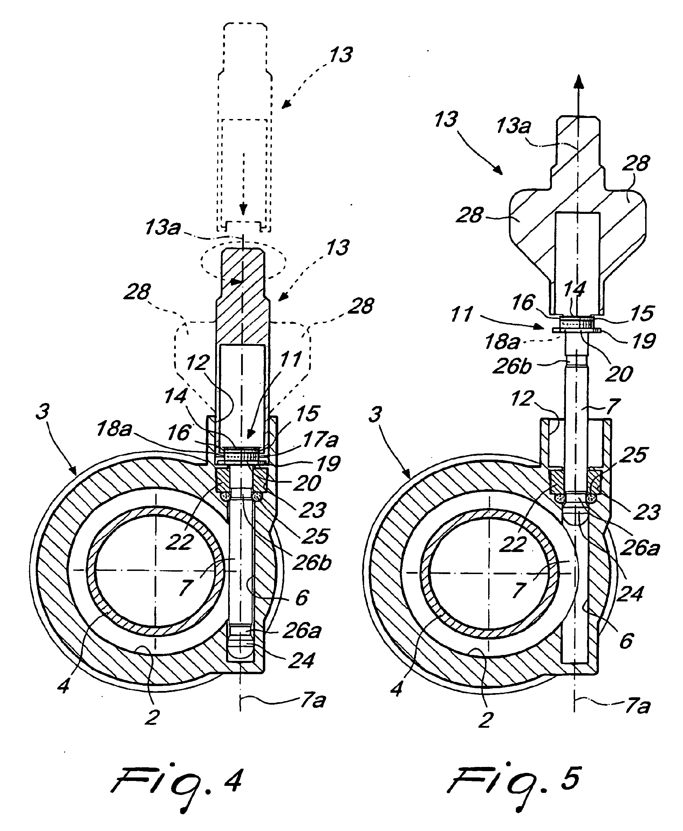

Preferably, the retention means comprise means for stopping the sliding of the pin 7 along the passage 6 in a first position, in which the pin 7 is inserted partially within the passage 6 but is disengaged from the male element 4, i.e., is located outside the female seat 2, and in a second position, in which the pin 7 is inserted in the passage 6 and engages the male element 4. These stop means comprise, in addition to the ring 25, two circumferential grooves 26a, 26b which are provided on the lateral surface of the pin 7 and are spaced along the axial extension of the pin 7. The circumferential grooves 26a, 26b are arranged so that the groove 26a is located at the ring 25 when the pin 7 has just been inserted in the passage 6 and has not yet engaged the male element 4, as shown in Figure 5, and so that the other groove 26b is located at the ring 25 when the pin 7 is completely inserted in the passage 6 and thus engaged with the male element 4, as shown in Figure 4. The ring 25, by engaging one groove or the other 26a or 26b, stops the pin 7 in the two corresponding positions.

Conveniently, the actuation key 13 has two lateral wings 28 which protrude from the outer lateral surface of its body and facilitate the use of the actuation key 13.

The sealing means 8, which are interposed between the male element 4 and the female seat 2, are conveniently constituted by a gasket, preferably an O-Ring, accommodated partially within an annular seat 27 which is provided on the lateral surface of the female seat 2 and engages the lateral surface of the male element 4.

The annular seat 27 for the gasket 8 is spaced toward the inside of the female seat 2 with respect to the region occupied by the passage 6.

The components to be connected by means of the device according to the invention can be constituted by manifolds, flow control valves, pipes, unions or other components of liquid or gas distribution systems.

Operation of the device, as regards moving the pin 7 from the second position to the first position cited above, is as follows.

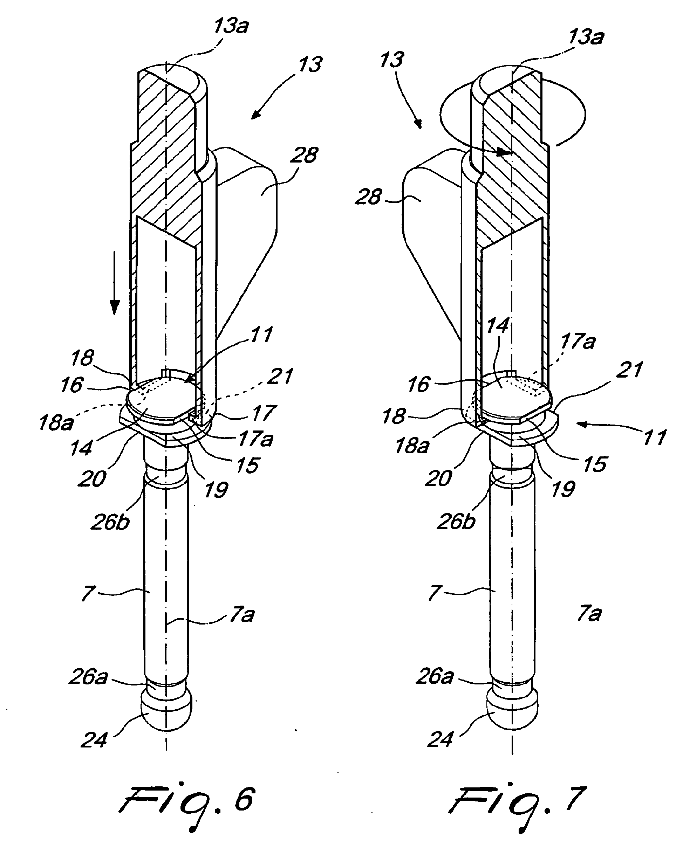

As mentioned, when the pin 7 is in the second position, i.e. in the position in which it locks at least axially the male element 4 in the female seat 2, the second flange 19 rests on the bottom of the recessed seat 12, as shown in Figure 4. With the pin 7 in this position, the end of the actuation key 13 provided with the protrusions 17, 18 and with the undercut teeth 17a, 18a is inserted coaxially in the recessed seat 12 and is rotated about its own axis 13a with respect to the pin 7, until the protrusions 17, 18, with the undercut teeth 17a, 18a, are located at the cutouts 15, 16 which are defined by the flat portions, further applying a slight pressure of the actuation key 13 toward the bottom of the recessed seat 12. When the protrusions 17, 18 are arranged at the cutouts 15, 16 (Figure 6), the slight axial pressure applied to the actuation key 13 makes the protrusions 17, 18 and the undercut teeth 17a, 18a move beyond the first flange 14 and makes the protrusions 17, 18 with the undercut teeth 17a, 18a rest against the face of the second flange 19 that is directed toward the first flange 14.

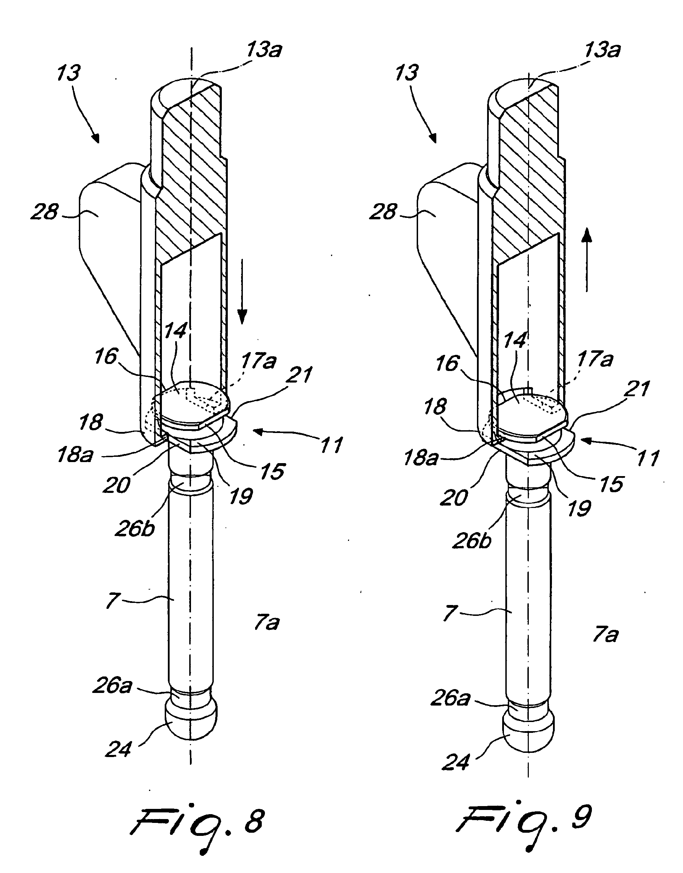

At this point, the actuation key 13 is turned further about its own axis with respect to the pin 7, again also applying a slight axial pressure to the actuation key 13 toward the bottom of the recessed seat 12. This slight axial pressure, when the protrusions 17, 18 with the undercut teeth 17a, 18a arrive at the flat portions of the second flange 19 (Figure 7), causes the end of the actuation key 13 to rest against the bottom of the recessed seat 12 and causes the mating of the protrusions 17, 18 having the undercut teeth 17a, 18a with the flat portions of the second flange 19 (Figure 8). This mating couples, in the rotation about the common axis, the pin 7 and the actuation key 13, the undercut teeth 17a, 18a of which are offset at 90° about the axis of the pin 7 with respect to the flat portions of the first flange 14.

Any further rotation of the actuation key 13 about its own axis 13a, which coincides with the axis 7a of the pin 7, does not alter this rotational position of the actuation key 13 with respect to the pin 7, since the mating of the protrusions 17, 18 with the undercut teeth 17a, 18a with the flat regions of the second flange 19 rigidly couples the actuation key 13 to the pin 7 in rotation about the common axis.

Thanks to this fact, by pulling the actuation key 13 in the opposite direction with respect to the bottom of the recessed seat 12, the undercut teeth 17a, 18a engage against the face of the first flange 14 that is directed toward the bottom of the recessed seat 12 (Figure 9), with consequent sliding of the pin 7 along the passage 6 until the first position is reached in which the axial sliding of the pin 7 is blocked by the engagement of the ring 25 with the groove 26a and by the presence of the elastic ring 22 which prevents complete extraction of the pin 7 from the passage 6 (Figure 5).

To move the pin 7 into the second position, it is sufficient to press the actuation head 11 toward the bottom of the recessed seat 12 by means of the actuation key 13 proper or by means of an element which can be inserted in any manner in the recessed seat 12.

In practice it has been found that the device according to the invention fully achieves the intended aim, since by allowing the disengagement of the locking pin from the male element only by means of an appropriate actuation key, it safely excludes the possibility of accidental or unintentional tampering with the connection between the two components provided by means of the device according to the invention.

The device thus conceived is susceptible of numerous modifications and variations, all of which are within the scope of the appended claims;

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for quick connection of two components (3, 5) of systems for the distribution of liquids or gases, the device comprising a female seat (2), which is defined in a first component (3) of the two components (3, 5) to be connected, and a male element (4), which is provided at an end of the second component (5) and can be mated with said female seat (2), a passage (6) being provided within said first component (3) which interferes with said female seat (2) and accommodates a locking pin (7) which can move along said passage (6) in order to pass from a first position, in which it is disengaged from said male element (4), to a second position, in which it engages said male element (4), wherein said pin (7) has, at one of its longitudinal ends, an actuation head (11) which is accommodated, when said pin (7) is in said second position, in a recessed seat (12) formed in said first component (3) at the inlet of said passage (6), an actuation key (13) being provided which can be inserted in said recessed seat (12), **characterised in that** said actuation key (13) can engage said pin actuation head (11), so as to be monolithic in translational motion along a direction which is parallel to the longitudinal extension of said pin (7), in order to engage said pin (7) and pull it for its passage from said second position to said first position.

2. The device according to claim 1, **characterized in that** said actuation key (13) can engage said actuation head (11) or can be disengaged from said actuation head (11) by turning said actuation key (13) about its own axis with respect to said actuation head (11).

3. The device according to claims 1 and 2, **characterized in that** it comprises means (14, 19) for delimiting the rotation of said actuation key (13) about its own axis with respect to said actuation head (11) in order to keep said actuation key (13) engaged with said actuation head (11).

4. The device according to one or more of the preceding claims, **characterized in that** said actuation head (11) has, at its end directed toward the outside of said recessed seat (12), a first flange (14) which has at least one perimetric cutout (15, 16) and **in that** said actuation key (13) has, at its end which can be inserted in said recessed seat (12), at least one protrusion (17, 18) which can be inserted in said cutout (15, 16) and is provided with an undercut tooth (17a, 18a) which can be positioned on the face of said first flange (14) which is directed toward the bottom of said recessed seat (12) and can be offset with respect to said cutout (15, 16) by turning, through a preset angle, said actuation key (13) with respect to said actuation head (11).

5. The device according to one or more of the preceding claims, **characterized in that** said at least one cutout (15, 16) comprises two cutouts (15, 16) which are defined at two diametrically mutually opposite regions of said first flange (14), said actuation key (11) having, at its end which can be inserted in said recessed seat (12), at least two protrusions (17, 18) which are arranged so as to correspond to said two cutouts (15, 16) and can be inserted through said cutouts, said protrusions (17, 18) being each provided with an undercut tooth (17a, 18a) which can be positioned on the face of said first flange (14) which is directed toward the bottom of said recessed seat (12) and can be offset with respect to said cutouts (15, 16) by turning, through an angle of substantially 90°, said actuation key (13) with respect to said actuation head (11).

6. The device according to one or more of the preceding claims, **characterized in that** said two cutouts (15, 16) are defined by perimetric flat portions of said first flange (14), said protrusions (17, 18) with the corresponding undercut tooth (17a, 18a) having a shape which is complementary to the shape of said cutouts (15, 16).

7. The device according to one or more of the preceding claims, **characterized in that** said means for delimiting the rotation of said actuation key (13) about its own axis (13a) with respect to said actuation head (11) comprise a second flange (19), which is spaced from said first flange (14) and faces its face which is directed toward the bottom of said recessed seat (12), said second flange (19) having at least one stroke limiting shoulder (20, 21) which can be engaged by said undercut tooth (17a, 18a) arranged on the face of said first flange (14) which is directed toward the bottom of said recessed seat (12).

8. The device according to one or more of the preceding claims, **characterized in that** said at least one stroke limiting shoulder (20, 21) comprises two perimetric flat portions of said second flange (19) which are substantially offset by 90° about the axis (7a) of the pin (7) with respect to the perimetric flat portions of said first flange (14), said flat portions of the second flange (19) being provided substantially like the flat portions of said first flange (14) and being each associable with one of said protrusions (17, 18) with the corresponding undercut tooth (17a, 18a).

9. The device according to one or more of the preceding claims, **characterized in that** said protrusions (17, 18) are arranged at an axial end of the body of said actuation key (13) which is provided, at least proximate to said protrusions (17, 18), as a hollow cylinder which can be fitted coaxially around said first flange (14), said protrusions being (17, 18) constituted by two portions of the side wall of said hollow cylindrical body which are arranged in two diametrically mutually opposite regions, and the corresponding undercut tooth (17a, 18a) being constituted by a tab of said protrusions (17, 18) which lies on a plane which is substantially perpendicular to the axis of said hollow cylindrical body.

10. The device according to one or more of the preceding claims, **characterized in that** said actuation key (13) is provided with lateral wings (28) which are connected to the outer lateral surface of said hollow cylindrical body.

11. The device according to one or more of the preceding claims, **characterized in that** said second flange (19), with said pin (7) in said second position, rests against the bottom of said recessed seat (12), which defines a stroke limiting contact portion for the end of said actuation key (13) inserted in said recessed seat (12).

12. The device according to one or more of the preceding claims, **characterized in that** said actuation head (11), with said pin (7) in said second position, is accommodated completely within said recessed seat (12).

13. The device according to one or more of the preceding claims, **characterized in that** said actuation head (11), with said pin (7) in said second position, is spaced toward the inside of said recessed seat (12) from the access opening of said recessed seat (12) through which said actuation key (13) is inserted.

14. The device according to one or more of the preceding claims, **characterized in that** said female seat (2) is substantially cylindrical or conical and **in that** said male element (4) is constituted by a substantially cylindrical or conical sleeve which can be mated with said female seat (2), sealing means (8) being interposed between said female seat (2) and said sleeve, said sleeve having, on the outer lateral surface of its portion which can be inserted in said female seat (2), at least one axial shoulder which is directed away from the end of said sleeve that can be inserted in said female seat (2) and can be positioned, upon insertion of said sleeve in said female seat (2) , at said passage (6) which lies along a substantially rectilinear direction which is perpendicular to the axis of said female seat (2) and can be occupied by said pin (7) which defines an abutment for said at least one axial shoulder to prevent the axial extraction of said sleeve from said female seat (2).

15. The device according to one or more of the preceding claims, **characterized in that** said at least one shoulder is defined by a circumferential groove (9) which is provided on the outer lateral surface of said sleeve.

16. The device according to one or more of the preceding claims, **characterized in that** said circumferential groove (9) defines, on the outer lateral surface of said sleeve, two mutually opposite axial shoulders, said pin (7) engaging between said two mutually opposite axial shoulders.

17. The device according to one or more of the preceding claims, **characterized in that** said passage (6) is substantially tangent to the bottom of said circumferential groove (9) provided on the outer lateral surface of said sleeve.

18. The device according to one or more of the preceding claims, **characterized in that** it comprises means (22) for retaining said pin (7) in said passage (6).

## Patentansprüche

1. Vorrichtung zur Schnellverbindung von zwei Komponenten (3, 5) von Systemen zur Verteilung von Flüssigkeiten oder Gasen, wobei die Vorrichtung einen Aufnahmesitz (2), der in einer ersten Komponente (3) der beiden zu verbindenden Komponenten (3, 5) ausgebildet ist und ein Steckelement (4) aufweist, welches an einem Ende der zweiten Komponente (5) vorgesehen ist und mit dem Aufnahmesitz (2) zusammenfügbar ist, wobei ein Durchlass (6) innerhalb der ersten Komponente (3) vorgesehen ist, der in den Aufnahmesitz (2) eingreift und einen Verriegelungsstift (7) aufnimmt, der entlang des Durchlasses (6) bewegbar ist zum Übergang von einer ersten Position, in der er sich in einer Stellung außer Eingriff von dem Steckelement (4) befindet, zu einer zweiten Position, in der er sich mit dem Steckelement (4) im Eingriff befindet, wobei der Stift (7) an einem seiner Enden in Längsrichtung einen Betätigungskopf (11) besitzt, der sich, wenn sich der Stift (7) in der zweiten Position befindet, in einem mit einer Vertiefung versehenen Sitz (12) aufgenommen befindet, der in der ersten Komponente (3) an dem Einlass des Durchlasses (6) ausgebildet ist, wobei ein Betätigungsschlüssel (13) vorgesehen ist, der in den mit der Vertiefung versehenen Sitz (12) einführbar ist, **dadurch gekennzeichnet, dass** der Betätigungsschlüssel (13) mit dem Betätigungskopf (11) des Stiftes in Eingriff bringbar ist derart, dass er in einer Translationsbewegung entlang einer Richtung, die parallel zur Längserstreckung des Stiftes (7) verläuft, damit zum Eingriff mit dem Stift (7) und zu dessen Ziehen zum Übergang von der zweiten Position zu der ersten Position monolithisch ist.

2. Vorrichtung nach Anspruch 1, **dadurch gekennzeichnet, dass** der Betätigungsschlüssel (13) mit dem Betätigungskopf (11) in Eingriff bringbar ist oder von dem Betätigungskopf (11) außer Eingriff bringbar ist durch Drehen des Betätigungsschlüssels (13) um seine eigene Achse bezogen auf den Betätigungskopf (11).

3. Vorrichtung nach Anspruch 1 und 2, **dadurch gekennzeichnet, dass** sie Mittel (14, 19) umfasst zur Begrenzung der Drehbewegung des Betätigungsschlüssel (13) um seine eigene Achse bezogen auf den Betätigungskopf (11) zur Beibehaltung des Eingriffs des Betätigungsschlüssels (13) mit dem Betätigungskopf (11).

4. Vorrichtung nach einem oder mehreren der vorstehenden Ansprüche, **dadurch gekennzeichnet, dass** der Betätigungskopf (11) an seinem Ende, welches der Außenseite des mit einer Vertiefung versehenen Sitzes (12) zugewandt ist, einen ersten Flansch (14) besitzt, der wenigstens einen Ausschnitt (15, 16) am Umfang besitzt und dass der Betätigungskopf (13) an seinem Ende, welches in den mit einer Vertiefung versehenen Sitz (12) einführbar ist, wenigstens einen Vorsprung (17, 18) besitzt, der in den Ausschnitt (15, 16) einführbar ist und mit einem hinterschnittenen Zahn (17a, 18a) versehen ist, der an der Fläche des ersten Flansches (14) positionierbar ist, die der Unterseite des mit einer Vertiefung versehenen Sitzes (12) zugewandt ist und der bezogen auf den Ausschnitt (15, 16) durch Drehen des Betätigungsschlüssel (13) relativ zum Betätigungskopf (11) um einen vorbestimmten Winkel, versetzbar ist.

5. Vorrichtung nach einem oder mehreren der vorstehenden Ansprüche, **dadurch gekennzeichnet, dass** der wenigstens eine Ausschnitt (15, 16) zwei Ausschnitte (15, 16) aufweist, die an zwei diametral einander gegenüberliegenden Bereichen des ersten Flansches (14) ausgebildet sind, wobei der Betätigungsschlüssel (11) an seinem Ende, welches in den mit einer Vertiefung versehenen Sitz (12) einführbar ist, wenigstens zwei Vorsprünge (17, 18) aufweist, die so angeordnet sind, dass sie den beiden Ausschnitten (15, 16) zugeordnet sind und durch die Ausschnitte hindurch einführbar sind, wobei die Vorsprünge (17, 18) jeweils mit einem hinterschnittenen Zahn (17a, 18a) versehen sind, der an der Fläche des ersten Flansches (14) positionierbar ist, die der Unterseite des mit einer Vertiefung versehenen Sitzes (12) zugewandt ist und der bezogen auf die Ausschnitte (15, 16) durch Drehen des Betätigungsschlüssel (13) relativ zum Betätigungskopf (11) um einen Winkel von weitgehend 90° versetzbar ist.

6. Vorrichtung nach einem oder mehreren der vorstehenden Ansprüche, **dadurch gekennzeichnet, dass** die zwei Ausschnitte (15, 16) von am Umfang des ersten Flansches (14) angeordneten flachen Abschnitten gebildet sind und die Vorsprünge (17, 18) mit dem zugehörigen hinterschnittenen Zahn (17a, 18a) eine Form besitzen, die zur Form der Ausschnitte (15, 16) komplementär ist.

7. Vorrichtung nach einem oder mehreren der vorstehenden Ansprüche, **dadurch gekennzeichnet, dass** die Mittel zur Begrenzung der Drehbewegung des Betätigungsschlüssels (13) um seine eigene Achse (13a) bezogen auf den Betätigungskopf (11) einen zweiten Flansch (19) umfassen, der von dem ersten Flansch (14) beabstandet ist und dessen Fläche gegenüber liegt, die der Unterseite des mit einer Vertiefung versehenen Sitzes (12) zugewandt ist, wobei der zweite Flansch (19) wenigstens eine den Hub begrenzende Schulter (20, 21) aufweist, die mit dem hinterschnittenen Zahn (17a, 18a) in Eingriff bringbar ist, der an der Fläche des ersten Flansches (14) angeordnet ist, die der Unterseite des mit einer Vertiefung versehenen Sitzes (12) zugewandt ist.

8. Vorrichtung nach einem oder mehreren der vorstehenden Ansprüche, **dadurch gekennzeichnet, dass** die wenigstens eine den Hub begrenzende Schulter (20, 21) zwei flache Abschnitte am Umfang des zweiten Flansches (19) umfasst, die um die Achse (7a) des Stiftes (7) bezogen auf die am Umfang angeordneten flachen Abschnitte des ersten Flansches (14) um im wesentlichen 90° versetzt sind, wobei die flachen Abschnitte des zweiten Flansches (19) im wesentlichen ähnlich zu den flachen Abschnitten des ersten Flansches (14) vorgesehen sind und mit dem entsprechenden hinterschnittenen Zahn (17a, 18a) mit jeweils einem der Vorsprünge (17, 18) vereinigbar sind.

9. Vorrichtung nach einem oder mehreren der vorstehenden Ansprüche, **dadurch gekennzeichnet, dass** die Vorsprünge (17, 18) an einem axialen Ende des Körpers des Betätigungsschlüssels (13) angeordnet sind, der wenigstens benachbart zu den Vorsprüngen (17, 18) als ein Hohlzylinder vorgesehen ist, der koaxial um den ersten Flansch (14) herum einpassbar ist, wobei die Vorsprünge (17, 18) von zwei Abschnitten der Seitenwand des hohlen zylindrischen Körpers gebildet sind, die an zwei einander diametral gegenüberliegenden Bereichen angeordnet sind und der entsprechende hinterschnittene Zahn (17a, 18a) von einem Streifen der Vorsprünge (17, 18) gebildet ist, der in einer Ebene liegt, die weitgehend rechtwinklig zu der Achse des hohlen zylindrischen Körpers verläuft.

10. Vorrichtung nach einem oder mehreren der vorstehenden Ansprüche, **dadurch gekennzeichnet, dass** der Betätigungsschlüssel (13) mit seitlichen Flügeln (28) versehen ist, die mit der äußeren seitlichen Fläche des hohlen zylindrischen Körpers verbunden sind.

11. Vorrichtung nach einem oder mehreren der vorstehenden Ansprüche, **dadurch gekennzeichnet, dass** der zweite Flansch (19) mit dem Stift (7) in der zweiten Position an der Unterseite des mit einer Vertiefung versehenen Sitzes (12) anliegt, der einen den Hub begrenzenden Kontaktabschnitt für das Ende des in den mit der Vertiefung versehenen Sitz (12) eingeführten Betätigungsschlüssels bildet.

12. Vorrichtung nach einem oder mehreren der vorstehenden Ansprüche, **dadurch gekennzeichnet, dass** der Betätigungskopf (11) mit dem Stift (7) in der zweiten Position vollständig innerhalb des mit einer Vertiefung versehenen Sitzes (12) aufgenommen ist.

13. Vorrichtung nach einem oder mehreren der vorstehenden Ansprüche, **dadurch gekennzeichnet, dass** der Betätigungskopf (11) mit dem Stift (7) in der zweiten Position zur Innenseite des mit einer Vertiefung versehenen Sitzes (12) von der Zugangsöffnung des mit einer Vertiefung versehenen Sitzes (12) aus, durch die der Betätigungsschlüssel (13) eingeführt ist, beabstandet ist.

14. Vorrichtung nach einem oder mehreren der vorstehenden Ansprüche, **dadurch gekennzeichnet, dass** der Aufnahmesitz (2) weitgehend zylindrisch oder konisch ist und dass das Steckelement (4) von einer weitgehend zylindrischen oder konischen Hülse gebildet ist, die mit dem Aufnahmesitz (2) zusammenfügbar ist, wobei eine Dichtungseinrichtung (8) zwischen dem Aufnahmesitz (2) und der Hülse angeordnet ist und die Hülse an einer äußeren Seitenfläche ihres Abschnitts, der in den Aufnahmesitz (2) einführbar ist, wenigstens eine axiale Schulter aufweist, die von dem Ende der Hülse, welches in den Aufnahmesitz (2) einführbar ist, weg gerichtet ist und nach dem Einführen der Hülse in den Aufnahmesitz (2) an dem Durchlass (6) positionierbar ist, der entlang einer weit gehend geradlinigen Richtung verläuft, die rechtwinklig ist zu der Achse des Aufnahmesitzes (2) und von dem Stift (7) besetzbar ist, der ein Widerlager für wenigstens eine axiale Schulter bildet zur Vermeidung des axialen Herausziehens der Hülse aus dem Aufnahmesitz (2).

15. Vorrichtung nach einem oder mehreren der vorstehenden Ansprüche, **dadurch gekennzeichnet, dass** die wenigstens eine Schulter von einer Umfangsnut (9) gebildet ist, die an einer äußeren Seitenfläche der Hülse vorgesehen ist.

16. Vorrichtung nach einem oder mehreren der vorstehenden Ansprüche, **dadurch gekennzeichnet, dass** die Umfangsnut (9) an einer äußeren Seitenfläche der Hülse zwei einander gegenüberliegende axiale Schultern, wobei der Stift (7) eine Eingriffsstellung zwischen den beiden einander gegenüberliegenden axialen Schultern einnimmt.

17. Vorrichtung nach einem oder mehreren der vorstehenden Ansprüche, **dadurch gekennzeichnet, dass** der Durchlass (6) weit gehend tangential zu der Unterseite der Umfangsnut (9) verläuft, die an der äußeren Seitenfläche der Hülse vorgesehen ist.

18. Vorrichtung nach einem oder mehreren der vorstehenden Ansprüche, **dadurch gekennzeichnet, dass** sie Mittel (22) zum Halten des Stiftes (7) in dem Durchlass (6) aufweist.

## Revendications

1. Dispositif de raccordement rapide de deux composants (3, 5) de systèmes pour la distribution de liquides ou de gaz, le dispositif comprenant un siège femelle (2) qui est défini dans un premier composant (3) des deux composants (3, 5) à raccorder, et un élément mâle (4) qui est disposé à une extrémité du deuxième composant (5) et qui peut être apparié audit siège femelle (2), un passage (6) étant disposé à l'intérieur dudit premier composant (3) qui interfère avec ledit siège femelle (2) et qui loge une broche de blocage (7) qui peut se déplacer le long dudit passage (6) afin de passer d'une première position, dans laquelle elle est libérée dudit élément mâle (4), à une deuxième position dans laquelle elle est en prise avec ledit élément mâle (4), dans lequel ladite broche (7) a, à une de ses extrémités longitudinales, une tête d'actionnement (11) qui, quand ladite broche (7) est dans ladite deuxième position, est logée dans un siège en creux (12) formé dans ledit premier composant (3) à l'entrée dudit passage (6), une clavette d'actionnement (13) étant prévue, qui peut être insérée dans ledit siège en creux (12), **caractérisé en ce que** ladite clavette d'actionnement (13) peut entrer en prise avec ladite tête d'actionnement (11) de broche de façon à être monolithique dans le mouvement de translation le long d'une direction qui est parallèle à l'extension longitudinale de ladite broche (7) afin d'entrer en prise avec ladite broche (7) et de tirer dessus pour son passage de ladite deuxième position à ladite première position.

2. Dispositif selon la revendication 1, **caractérisé en ce que** ladite clavette d'actionnement (13) peut entrer en prise avec ladite tête d'actionnement (11) ou peut être libérée de ladite tête d'actionnement (11) en faisant tourner ladite clavette d'actionnement (13) autour de son propre axe par rapport à ladite tête d'actionnement (11).

3. Dispositif selon les revendications 1 et 2, **caractérisé en ce qu'**il comprend des moyens (14, 19) pour délimiter la rotation de ladite clavette d'actionnement (13) autour de son propre axe par rapport à ladite tête d'actionnement (11) afin de maintenir ladite clavette d'actionnement (13) en prise avec ladite tête d'actionnement (11).

4. Dispositif selon une ou plusieurs des revendications précédentes, **caractérisé en ce que** ladite tête d'actionnement (11) a, à son extrémité dirigée vers l'extérieur dudit siège en creux (12), une première bride (14) qui a au moins une découpe (15, 16) périphérique, et **en ce que** ladite clavette d'actionnement (13) a, à son extrémité qui peut être insérée dans ledit siège en creux (12), au moins une saillie (17, 18) qui peut être insérée dans ladite découpe (15, 16), et est munie d'une dent (17a, 18a) contre-dépouillée qui peut être positionnée sur la face de ladite première bride (14) qui est dirigée vers le fond dudit siège en creux (12) et qui peut être décalée par rapport à ladite découpe (15, 16) en faisant tourner, d'un angle prédéfini, ladite clavette d'actionnement (13) par rapport à ladite tête d'actionnement (11).

5. Dispositif selon une ou plusieurs des revendications précédentes, **caractérisé en ce que** ladite découpe (15, 16) au moins au nombre de un comprend deux découpes (15, 16) qui sont définies au niveau de deux régions diamétralement opposées mutuellement de ladite première bride (14), ladite tête d'actionnement (11) ayant, à son extrémité qui peut être insérée dans ledit siège en creux (12), au moins deux saillies (17, 18) qui sont agencées de façon à correspondre auxdites deux découpes (15, 16) et peuvent être insérées à travers lesdites découpes, lesdites saillies (17, 18) étant munies chacune d'une dent (17a, 18a) contre-dépouillée qui peut être positionnée sur la face de ladite première bride (14) qui est dirigée vers le fond dudit siège en creux (12) et qui peut être décalée par rapport auxdites découpes (15, 16) en faisant tourner, d'un angle essentiellement égal à 90°, ladite clavette d'actionnement (13) par rapport à ladite tête d'actionnement (11).

6. Dispositif selon une ou plusieurs des revendications précédentes, **caractérisé en ce que** lesdites deux découpes (15, 16) sont définies par des portions plates périphériques de ladite première bride (14), lesdites saillies (17, 18) avec la dent (17a, 18a) contre-dépouillée correspondante ayant une forme qui est complémentaire par rapport à la forme desdites découpes (15, 16).

7. Dispositif selon une ou plusieurs des revendications précédentes, **caractérisé en ce que** lesdits moyens de délimitation de la rotation de ladite clavette d'actionnement (13) autour de son propre axe (13a) par rapport à ladite tête d'actionnement (11) comprennent une deuxième bride (19) qui est espacée de ladite première bride (14) et fait face à sa face qui est dirigée vers le fond dudit siège en creux (12), ladite deuxième bride (19) ayant au moins un épaulement (20, 21) de limitation de course qui peut être mis en prise par ladite dent (17a, 18a) contre-dépouillée agencé sur la face de ladite première bride (14) qui est dirigée vers le fond dudit siège en creux (12).

8. Dispositif selon une ou plusieurs des revendications précédentes, **caractérisé en ce que** ledit épaulement (20, 21) de limitation de course au moins au nombre de un comprend deux portions plates périphériques de ladite deuxième bride (19) qui sont essentiellement décalées de 90° autour de l'axe (7a) de la broche (7) par rapport aux portions plates périphériques de ladite première bride (14), lesdites portions plates de la deuxième bride (19) étant disposées essentiellement comme les portions plates de ladite première bride (14) et pouvant chacune être associées avec une desdites saillies (17, 18) avec la dent (17a, 18a) contre-dépouillée correspondante.

9. Dispositif selon une ou plusieurs des revendications précédentes, **caractérisé en ce que** lesdites saillies (17, 18) sont agencées à une extrémité axiale du corps de ladite clavette d'actionnement (13) qui est disposée, au moins à proximité desdites saillies (17, 18), sous forme de cylindre creux qui peut être monté de façon coaxiale autour de ladite première bride (14), les dites saillies (17, 18) étant constituées par deux portions de la paroi latérale dudit corps cylindrique creux qui sont agencées dans deux régions diamétralement opposées mutuellement , et ladite dent (17a, 18a) contre-dépouillée correspondante étant constituée par une patte desdites saillies (17, 18) qui repose sur un plan qui est essentiellement perpendiculaire à l'axe dudit corps cylindrique creux.

10. Dispositif selon une ou plusieurs des revendications précédentes, **caractérisé en ce que** ladite clavette d'actionnement (13) est munie d'ailes latérales (28) qui sont raccordées à la surface latérale extérieure dudit corps cylindrique creux.

11. Dispositif selon une ou plusieurs des revendications précédentes, **caractérisé en ce que** ladite deuxième bride (19), avec ladite broche (7) dans ladite deuxième position, repose contre le fond dudit siège en creux (12), ce qui définit une portion de contact de limitation de course pour l'extrémité de ladite clavette d'actionnement (13) insérée dans ledit siège en creux (12).

12. Dispositif selon une ou plusieurs des revendications précédentes, **caractérisé en ce que** ladite tête d'actionnement (11), avec ladite broche (7) dans ladite deuxième position, est logée complètement à l'intérieur dudit siège en creux (12).

13. Dispositif selon une ou plusieurs des revendications précédentes, **caractérisé en ce que** ladite tête d'actionnement (11), avec ladite broche (7) dans ladite deuxième position, est espacée, vers l'intérieur dudit siège en creux (12), de l'ouverture d'accès dudit siège en creux (12) à travers laquelle ladite clavette d'actionnement (13) est insérée.

14. Dispositif selon une ou plusieurs des revendications précédentes, **caractérisé en ce que** ledit siège femelle (2) est essentiellement cylindrique ou conique, et **en ce que** ledit élément mâle (4) est constitué d'un manchon essentiellement cylindrique ou conique qui peut être apparié audit siège femelle (2), des moyens de scellement (8) étant interposés entre ledit siège femelle (2) et ledit manchon, ledit manchon ayant, sur la surface latérale extérieure de sa portion qui peut être insérée dans ledit siège femelle (2), au moins un épaulement axial qui est dirigé à distance de l'extrémité dudit manchon qui peut être insérée dans ledit siège femelle (2) et qui peut être positionné, lors de l'insertion dudit manchon dans ledit siège femelle (2), au niveau dudit passage (6) qui repose le long d'une direction essentiellement rectiligne qui est perpendiculaire à l'axe dudit siège femelle (2) et qui peut être occupé par ladite broche (7), ce qui définit un aboutement pour ledit épaulement axial au moins au nombre de un pour empêcher l'extraction axiale dudit manchon hors du siège en creux (12).

15. Dispositif selon une ou plusieurs des revendications précédentes, **caractérisé en ce que** ledit épaulement axial au moins au nombre de un est défini par une rainure circonférentielle (9) qui est prévue sur la surface latérale extérieure dudit manchon.

16. Dispositif selon une ou plusieurs des revendications précédentes, **caractérisé en ce que** ladite rainure circonférentielle (9) définit, sur la surface latérale extérieure dudit manchon, deux épaulements axiaux mutuellement opposés, ladite broche (7) entrant en prise entre lesdits deux épaulements axiaux mutuellement opposés.

17. Dispositif selon une ou plusieurs des revendications précédentes, **caractérisé en ce que** ledit passage (6) est essentiellement tangent au fond de ladite rainure circonférentielle (9) disposée sur la surface latérale extérieure dudit manchon.

18. Dispositif selon une ou plusieurs des revendications précédentes, **caractérisé en ce qu'**il comprend des moyens (22) pour retenir ladite broche (7) dans ledit passage (6).
